# EUROPÄISCHE PATENTSCHRIFT

(11) **EP 3 844 009 B1**
(45) Veröffentlichungstag und Bekanntmachung des Hinweises auf die Patenterteilung: **22.03.2023**
(21) Anmeldenummer: 20767798.0
(22) Anmeldetag: 04.09.2020
(51) Int. Cl.: B60K 1/00, B60K 11/00, B60K 11/02

(54) **VERFAHREN ZUR ÜBERWACHUNG EINES ÖLFLUSSES IN EINEM ÖLKÜHLKREIS**
METHOD FOR MONITORING AN OIL FLOW IN AN OIL COOLING CIRCUIT
PROCÉDÉ DE SURVEILLANCE D'UN FLUX D'HUILE DANS UN CIRCUIT DE REFROIDISSEMENT D'HUILE

(30) Priorität: 16.09.2019 DE 102019214080
(43) Veröffentlichungstag der Anmeldung: 07.07.2021
(73) Patentinhaber: Vitesco Technologies GmbH, 93055 Regensburg (DE)
(72) Erfinder: ESER, Gerhard, 81737 München (DE); BRETTNER, Sebastian, 81737 München (DE); DILLINGER, Manuel, 81737 München (DE); FEULNER, Markus, 81737 München (DE); ZHANG, Hong, 81737 München (DE)
(74) Vertreter: Vitesco Technologies
(86) Internationale Anmeldenummer: PCT/EP2020/074830
(87) Internationale Veröffentlichungsnummer: WO 2021/052785

(56) Entgegenhaltungen:
- DE-A1-102017 006 366
- DE-A1-102017 107 384
- DE-A1-102018 002 072

## Beschreibung

Die Erfindung betrifft ein Verfahren zur Überwachung eines mittels einer Ölpumpe erzeugten Ölflusses in einem Ölkühlkreis eines Thermomanagementsystems. Die Erfindung betrifft ferner ein Computerprogramm zur Durchführung dieses Verfahrens sowie ein Computerprogrammprodukt. Die Erfindung betrifft ferner ein Steuergerät mit diesem Computerprogramm.

Unter einem Fahrzeug ist dabei jede Art von Fahrzeug zu verstehen, welches eine zu temperierende Batterie sowie einen zu temperierenden Elektromotor bzw. E-Motor zum Antrieb des Fahrzeugs umfasst. Die Batterie kann dabei luftgekühlt und/oder kühlmittel- bzw. kühlflüssigkeits- bzw. wassergekühlt sein. Der E-Motor hingegen kann dabei entweder nur ölgekühlt oder sowohl kühlmittel- bzw. kühlflüssigkeits- bzw. wassergekühlt als auch ölgekühlt sein. Dabei kann es sich um ein teilelektrisches oder vollelektrisches Fahrzeug handeln, insbesondere aber um Personenkraftwagen und/oder Nutzfahrzeuge.

Aus der EP 2392486 B1 ist ein Thermomanagementsystem bekannt, welches einen ersten Kühlmittelkreis zur Temperierung einer Batterie und einen zweiten Kühlmittelkreis zur Temperierung eines Elektromotors und einer Leistungselektronik aufweist.

Aus dem Stand der Technik sind ferner die Druckschriften DE 10 2017 107384 A1, DE 10 2018 002072 A1 sowie DE 10 2017 006366 A1 bekannt.

Die DE 10 2017 107384 A1 offenbart ein Fahrzeugdiagnosesystem, welches u.a. Drücke eines Kühlkreises erfasst und überwacht. Die DE 10 2018 002072 A1 offenbart ein Verfahren zur Überwachung eines Druckzustandes eines Kraftstofftanks. Die DE 10 2017 006366 A1 offenbart druckgeregeltes Ölversorgungssystem eines Fahrzeugs.

Eine der Erfindung zugrunde liegende Aufgabe ist es, ein solches Thermomanagementsystem zu verbessern.

Diese Aufgabe wird durch ein gemäß Anspruch 1 unter Schutz gestelltes Verfahren zur Überwachung eines Ölflusses in einem einen Elektromotor umfassenden Ölkühlkreis eines Thermomanagementsystems gelöst. Vorteilhafte Ausführungsformen der Erfindung sind Gegenstand der Unteransprüche.

Es wird ein Verfahren zur Überwachung eines mittels einer Ölpumpe erzeugten Ölflusses in einem einen Elektromotor bzw. E-Motor umfassenden Ölkühlkreis eines Thermomanagementsystems vorgeschlagen. Im Ölkühlkreis werden dabei an einer ersten Stelle ein erster Drucksensor und an einer zweiten Stelle ein zweiter Drucksensor angeordnet, wobei mittels erfasster Drücke Druck-Differenzwerte ermittelt und die Druck-Differenzwerte mit einem vorgebbaren Vergleichswert für die Druck-Differenz verglichen werden, um auf einen Fehler zu überprüfen.

Durch diese vorgeschlagene Sensor-Redundanz lassen sich die erfassten Drücke bzw. Druckmesswerte plausibilisieren bzw. auf Plausibilität überprüfen.

In einer Ausführung wird der Ölfluss überwacht:
- in einer Druckaufbauphase (Phase I),
- in einer Betriebsphase (Phase II)
   und/oder
- in einer Druckabbauphase (Phase III).

In den einzelnen Phasen wird dabei zumindest ein Druck-Differenzwert ermittelt und der Druck-Differenzwert mit einem vorgebbaren, phasenbezogenen Vergleichswert für die Druck-Differenz verglichen wird, um auf einen Fehler zu überprüfen.

In einer weiteren Ausführung wird noch vor einer Aktivierung der Ölpumpe durch die Druck-Differenzwertermittlung auf einen elektrischen Fehler der Drucksensoren überprüft, indem der ermittelte Druck-Differenzwert mit einem vorgebbaren, ersten Druck-Vergleichswert verglichen wird.

In einer weiteren Ausführung wird nach einer Aktivierung der Ölpumpe während der Druckaufbauphase (Phase I) zumindest zu einem Druckhub der Ölpumpe ein Druck-Differenzwert ermittelt und der Druck-Differenzwert mit einem vorgebbaren, zweiten Druck-Vergleichswert verglichen, um auf einen Fehler in der Druckaufbauphase (Phase I) zu überprüfen.

Dabei kann zudem die Zeit bis zum Erreichen des Druckhubs mit einem vorgebbaren Zeit-Vergleichswert verglichen werden, um auf einen Fehler in der Druckaufbauphase (Phase I) zu überprüfen.

In einer weiteren Ausführung wird während der Betriebsphase (Phase II) zumindest ein Druck-Differenzwert ermittelt und mit einem vorgebbaren, dritten Druck-Vergleichswert verglichen, um auf einen elektrischen Fehler der Drucksensoren zu überprüfen.

Mittels der erfassten Drücke wird dann ein Mittelwert gebildet und der Mittelwert mit einem vorgebbaren, vierten Druck-Vergleichswert verglichen wird, um auf einen Fehler in der Betriebsphase (Phase II) zu überprüfen.

In einer weiteren Ausführung wird nach einer Deaktivierung der Ölpumpe während der Druckabbauphase (Phase III) zumindest ein Druck-Differenzwert ermittelt und der Druck-Differenzwert mit einem vorgebbaren, fünften Druck-Vergleichswert verglichen wird, um auf einen elektrischen Fehler der Drucksensoren zu überprüfen.

Zudem werden nach einer vorgebbaren Entprellzeit bezüglich der Deaktivierung die erfassten Drücke mit einem vorgebbaren, auf die Entprellzeit bezogenen Druck-Zielwert verglichen, um auf einen Fehler in der Druckabbauphase (Phase III) zu überprüfen.

In einer Ausführung ist der E-Motor rein ölgekühlt. Dabei wird der Ölkühlkreis über einen Wärmetauscher, etwa in Gestalt eines Plattenwärmetauschers, an einen Kühlmittelkreis thermisch angebunden, welcher z.B. eine Leistungselektronik des E-Motors sowie ein Batterieladegerät umfassen kann.

In einer weiteren Ausführung ist der Stator des E-Motors von einem Kühlmittelkreis umfasst und somit kühlflüssigkeitsgekühlt, wohingegen der Rotor des E-Motors von einem Ölkühlkreis umfasst und somit ölgekühlt ist. Dabei wird der Ölkühlkreis zur zusätzlichen Kühlung des E-Motors verwendet, wobei der Ölkühlkreis über einen Wärmetauscher, etwa in Gestalt eines Plattenwärmetauschers, an den Kühlmittelkreis thermisch angebunden wird.

In einer weiteren Ausführung werden die beiden Drucksensoren stromaufwärts eines Wärmetauschers, etwa in Gestalt eines Plattenwärmetauschers, und stromabwärts der Ölpumpe angeordnet.

Es wird ferner ein Computerprogramm zur Durchführung des zuvor beschriebenen Verfahrens vorgeschlagen und unter Schutz gestellt (vgl. Anspruch 12).

Das Computerprogramm kann dabei mit einfachen Mitteln in eine Ansteuerelektronik bzw. Steuereinheit eingelesen und dann verwendet werden, um den besagten Ölkühlkreis entsprechend zu überwachen.

Die Ansteuerelektronik kann dabei eine mit einem Speichersystem und einem Bussystem datenverbundene digitale Mikroprozessoreinheit (CPU), einen Arbeitsspeicher (RAM) sowie ein Speichermittel besitzen. Die CPU ist ausgebildet, Befehle, die als ein in einem Speichersystem abgelegtes Programm ausgeführt sind, abzuarbeiten, Eingangssignale vom Datenbus zu erfassen und Ausgangssignale an den Datenbus abzugeben. Das Speichersystem kann verschiedene Speichermedien in Gestalt magnetischer, Festkörper- und anderer nicht-flüchtiger Medien besitzen, auf dem ein entsprechendes Computerprogramm zur Durchführung des Verfahrens sowie der vorteilhaften Ausgestaltungen gespeichert ist. Das Programm kann derart beschaffen sein, dass es die hier beschriebenen Verfahren verkörpert bzw. auszuführen imstande ist, sodass die CPU die Schritte solcher Verfahren ausführen und damit den besagten Ölkühlkreislauf entsprechend überwachen kann.

Darüber hinaus wird ein Computerprogrammprodukt vorgeschlagen und unter Schutz gestellt (vgl. Anspruch 13), umfassend Programmcode-Mittel, die auf einem computerlesbaren Datenträger gespeichert sind, um das zuvor beschriebene Verfahren durchzuführen, wenn die Programmcode-Mittel auf einem Computer bzw. in einer CPU ausgeführt werden.

Ferner wird ein Steuergerät mit einem Computerprogramm zur Durchführung des zuvor beschriebenen Verfahrens vorgeschlagen und unter Schutz gestellt (vgl. Anspruch 14).

Es wird ferner ein Fahrzeug mit einem solchen Steuergerät vorgeschlagen und unter Schutz gestellt (vgl. Anspruch 15).

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen:
- Fig. 1: ein Thermomanagementsystem in einer vorgeschlagenen ersten Ausgestaltung,
- Fig. 2: das in Fig. 1 gezeigte Thermomanagementsystem in Verbindung mit einem Ölkühlkreis in einer ersten Ausgestaltung,
- Fig. 3: das in Fig. 1 gezeigte Thermomanagementsystem in Verbindung mit einem Ölkühlkreis in einer zweiten Ausgestaltung,
- Fig. 4: das in Fig. 1 gezeigte Thermomanagementsystem in Verbindung mit einem Ölkühlkreis in einer dritten Ausgestaltung,
- Fig. 5: Öl-Druckverläufe korrespondierend zu verschiedenen Phasen des Ölkühlkreises,
- Fig. 6: ein erstes Flussdiagramm korrespondierend zu einer vorgeschlagenen Überwachung des Ölkühlkreises in einer Druckaufbauphase,
- Fig. 7: ein zweites Flussdiagramm korrespondierend zu einer vorgeschlagenen Überwachung des Ölkühlkreises in einer Betriebsphase sowie
- Fig. 8: ein drittes Flussdiagramm korrespondierend zu einer vorgeschlagenen Überwachung des Ölkühlkreises in einer Druckabbauphase.

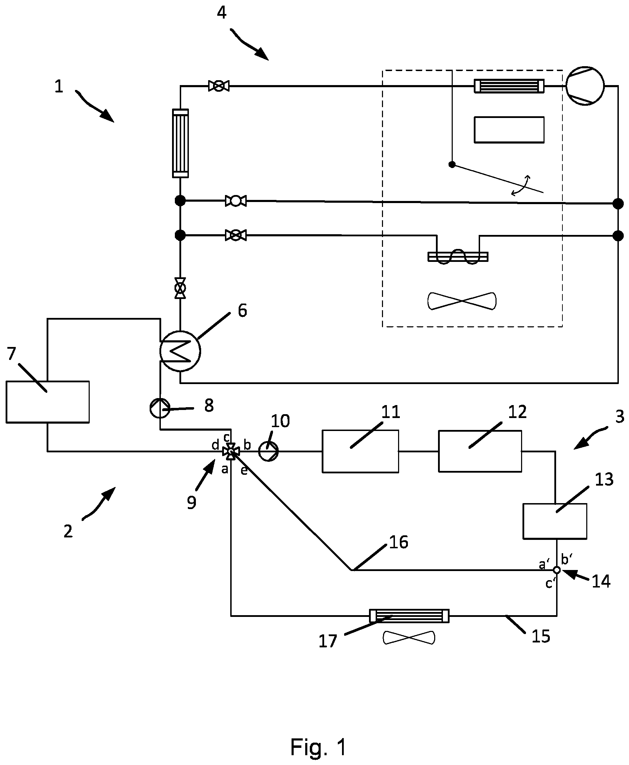

Das Thermomanagementsystem 1 eines Fahrzeugs nach Fig. 1 veranschaulicht einen ersten Kühlmittelkreis 2 für eine Batterie 7 und einen zweiten Kühlmittelkreis 3 für einen E-Motor 13 zum Antrieb des Fahrzeugs, sowie einen Kältemittelkreis 4 einer Klimaanlage, auf den aber im Folgenden nicht näher eingegangen wird. Bei dem Fahrzeug kann es sich dabei um ein batterieelektrisches Fahrzeug (Battery Electric Vehicle, kurz: BEV), ein Hybridelektrokraftfahrzeug (Hybrid Electric Vehicle, kurz: HEV) oder ein Brennstoffzellenfahrzeug (Fuel Cell Electric Vehicle, kurz: FCEV) handeln. Diese drei Kühlkreise 2, 3, 4 verschmelzen dabei gewissermaßen miteinander. In den beiden Kühlmittelkreisen 2, 3 wird die jeweilige Kühlflüssigkeit mittels einer eigenen elektrischen Pumpe 8, 10 gefördert.

Unter einer solchen Kühlflüssigkeit ist dabei eine Mischung von Wasser mit einem Kühlzusatzmittel zu verstehen. Die Kühlflüssigkeit hat dabei nicht nur die Aufgabe, Abwärme aufzunehmen und zu transportieren. Das Kühlzusatzmittel soll dabei das Wasser vor dem Durchfrieren schützen, die beiden Kühlmittelkreise vor Korrosion schützen, die beweglichen Teile in den beiden Kühlmittelkreisen schmieren sowie Kunststoff- und/oder Gummielemente in den beiden Kühlmittelkreisen vor Auflösung schützen.

Der E-Motor 13 und eine Leistungselektronik 12 sollen bei einer Kühlflüssigkeits- bzw. Kühlwassertemperatur von ca. 80 bis maximal 85°C betrieben werden. Dabei hat die Kühlflüssigkeit am Eingang in die Leistungselektronik 12 eine Temperatur von etwa 55°C und am Eingang in den E-Motor 13 eine Temperatur von etwa 65°C. Am Ausgang des E-Motors 13 hat die Kühlflüssigkeit dann eine Temperatur von ca. 80 bis maximal 85 °C.

Die Batterie 7 bzw. die Batteriezellen hingegen sollen in einem Kühlflüssigkeits- bzw. Kühlwassertemperaturfenster zwischen ca. 20 °C und ca. 40 °C betrieben werden, denn dies stellt einen optimalen Betriebstemperaturbereich der Batterie 7 sicher. Die Temperatur der Batterie 7 bzw. der einzelnen Batteriezellen selbst kann dabei die Temperaturschwelle von ca. 40°C durchaus überschreiten. Beide Kühlmittelkreise 2, 3 müssen Wärme sowohl aufnehmen als auch abgeben können. Während der Batteriekühlmittelkreis 2 über einen Wärmetauscher 6 (auch Chiller genannt; vgl. Fig. 1) gegenüber dem Kältemittelkreis 4 entwärmt wird, kann der E-Motorkühlmittelkreis 3 über einen Radiator bzw. Kühler 17 gegenüber der Umgebung entwärmt werden sowie gegenüber dem Batteriekühlmittelkreis 2 über ein im Folgenden beschriebenes Mehrwegeventil 9 (auch Coolant Flow Control Valve genannt, kurz: CFCV), wobei das Mehrwegeventil 9 eine Schnittstelle zwischen dem Batteriekühlmittelkreis 2 und dem E-Motorkühlmittelkreis 3 darstellt und welches dazu eine entsprechende Ventilstellung einnimmt, so dass sich die Kühlflüssigkeitsströme der beiden Kühlmittelkreise 2, 3 miteinander bedarfsgerecht vermischen können.

Die Entwärmung des Batteriekühlmittelkreises 2 kann auch bei einer entsprechenden Ventilstellung des Mehrwegeventils 9 über den Radiator bzw. Kühler 17 erfolgen. Da aber die Batteriekühlflüssigkeit eine Temperatur von 40 °C nicht überschreiten soll, reicht meist die Entwärmung über den Radiator 17 nicht aus, so dass Wärme über den Wärmtauscher 6 abgeführt werden muss. Im E-Motorkühlmittelkreis 3 ist neben dem E-Motor 13 und der Leistungselektronik 12 auch noch ein Ladegerät 11 (auch Charger genannt) zu kühlen. Zur Regelung der Kühlmittelkreise 2, 3 ist je ein - nicht dargestellter - Temperatursensor vorgesehen. Im Batteriekühlmittelkreis 2 ist ferner ein - nicht dargestellter - Widerstandsheizer vorgesehen, um kurzfristig elektrisch Wärme zuführen zu können.

Mittels des Mehrwegeventils 9 lässt sich das Thermomanagementsystem 1 in unterschiedlichen Modi betreiben. Das Mehrwegeventil 9 ist dabei Teil einer sog. Aktuatoreinheit - auch Kühlwasserventileinheit, Kühlwassersteuerventileinheit oder Kühlwasserregelventileinheit genannt -, die als solche auch eine Antriebseinheit mit einem Elektrostellmotor sowie eine Steuereinheit zur Steuerung des Elektrostellmotors umfasst.

In Sachen dieser Modi wird der Vollständigkeit halber auf die deutsche Patentanmeldung mit dem Aktenzeichen 10 2019 210 577.7 verwiesen, die darauf detailliert eingeht.

In einem ersten Modus des Systems (Use Case 1, kurz: UC1 = Reihenschaltung R mit maximaler Wärmerückgewinnung) und in einer ersten Ventilstellung des Mehrwegeventils 9 lässt sich der Kühlmittelkreis 2 in Reihe zum Kühlmittelkreis 3 schalten. Dabei strömt bezüglich des Mehrwegeventils 9 Kühlflüssigkeit über einen Zufluss bzw. Eingang a und einen Abfluss bzw. Ausgang c vom Kühlmittelkreis 3 in den Kühlmittelkreis 2 und schließlich über einen Zufluss bzw. Eingang d und einen Abfluss bzw. Ausgang b vom Kühlmittelkreis 2 zurück in den Kühlmittelkreis 3.

Diese Reihenschaltung bewirkt eine schnelle Erwärmung des Batteriekühlmittelkreises 2 unter Ausnutzung der Abwärme des E-Motors 13 sowie der Leistungselektronik 12. Der E-Motorkühlmittelkreis 3 hat somit auch die Funktion eines Heizkreises.

In einem zweiten Modus des Systems (Use Case 2, kurz: UC2 = Parallelschaltung P mit Überhitzungsschutz) und in einer zweiten Ventilstellung des Mehrwegeventils 9 lässt sich der Kühlmittelkreis 2 parallel zum Kühlmittelkreis 3 schalten, so dass die beiden Kühlmittelkreise 2, 3 fluidisch voneinander getrennt sind. Diese Trennung schützt die Batterie 7 vor einer Überhitzung.

Darüber hinaus wird auch ein dritter Modus des Systems (Use Case 3, kurz: UC3 = Mischmodus M mit selektiver Wärmerückgewinnung) vorgeschlagen, in welchem das Mehrwegeventil 9 in eine Zwischenstellung - d.h. eine dritte Ventilstellung - geschaltet ist, in welcher sich die Kühlflüssigkeitsströme der beiden Kühlmittelkreise 2, 3 miteinander bedarfsweise vermischen.

Durch einen solchen Mischmodus lässt sich sowohl die Kühlflüssigkeitstemperatur des Batteriekühlmittelkreises 2 als auch die Kühlflüssigkeitstemperatur des E-Motorkühlmittelkreises 13 genauer regeln. Es unterbleiben dabei vorteilhafterweise hohe Druck- und Temperatursprünge in den beiden Kühlmittelkreisen 2, 3, da ein häufiges Umschalten zwischen dem Reihenschaltungsmodus R und dem Parallelschaltungsmodus P unterbleibt.

In der hier vorgeschlagenen Ausführung (vgl. z.B. Fig. 1) ist das Mehrwegeventil 9 in Gestalt eines 5/3-Wegeventils ausgebildet. Dabei muss man sich auch einen aus der Ebene der Fig. 1 herausragenden Zufluss bzw. Eingang e des 5/3-Wegeventils vorstellen, der als solcher über einen Bypass-Pfad 16 mit einem Knotenpunkt 14 (bzw. dessen Abfluss a^{I}) stromabwärts des E-Motors 13 fluidisch verbunden ist, wobei dem Knotenpunkt 14 sowohl der Bypass-Pfad 16 als auch ein dazu paralleler Pfad 15 mit einem Radiator 17 entspringt. Der Radiatorpfad 15 verbindet den Knotenpunkt 14 (bzw. dessen Abfluss c^{I}) fluidisch mit dem Zufluss bzw. Eingang a des 5/3-Wegeventils.

Anstelle des besagten 5/3-Wegeventils ließe sich auch ein Mehrwegeventil in Gestalt eines 4/2-Wegeventils verwenden, über welches sich die zuvor beschriebenen Systemmodi und Ventilstellungen ebenfalls einstellen bzw. ansteuern lassen. Dabei ist im Kühlmittelkreis 3 stromabwärts des E-Motors 13 - anstelle des zuvor genannten Knotenpunktes - ein weiteres Mehrwegeventil in Gestalt eines 3/2-Wegeventils vorzusehen, welches mit dem Zufluss bzw. Eingang a des 4/2-Wegeventils fluidisch verbunden ist.

In Sachen dieser alternativen Ausgestaltung wird der Vollständigkeit halber ebenfalls auf die deutsche Patentanmeldung mit dem Aktenzeichen 10 2019 210 577.7 verwiesen, die darauf detailliert eingeht.

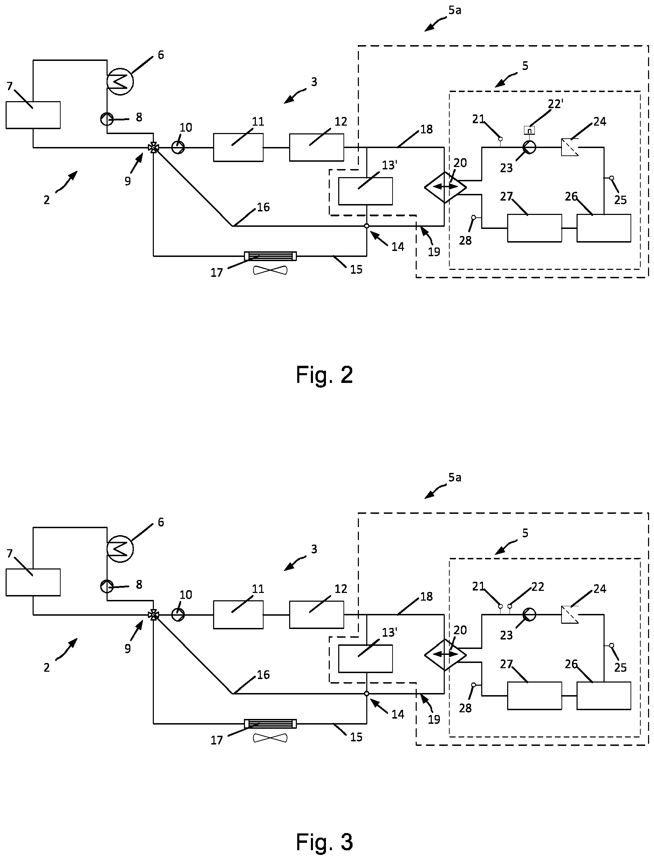

Das Thermomanagementsystem 1 umfasst ferner ein Ölkühlsystem 5a mit einem Ölkühlkreis 5 (vgl. Fig. 2, Fig. 3, Fig. 4) zur zusätzlichen Kühlung des E-Motors 13. Der Ölkühlkreis 5 ist dabei mittels eines Wärmetauschers 20 an den Kühlmittelkreis 3 thermisch angebunden. Der Ölkühlkreis 5 umfasst neben einem Teil des Wärmetauschers 20 den Rotor 27 des E-Motors 13 sowie ein Getriebe bzw. Untersetzungs- und/oder Übersetzungsgetriebe 26, z.B. in Gestalt eines dreistufigen Getriebes, welches mit dem E-Motor 13 (bzw. Stator 13^{I} und Rotor 27), eine E-Motor-Getriebe-Antriebseinheit bildet. Der Ölkühlkreis 5 umfasst ferner eine Ölpumpe 23, einen der Ölpumpe 23 fluidisch vorgeschalteten Ölfilter 24 sowie zwei Temperatursensoren 25, 28 (vgl. Fig. 2, Fig. 3, Fig. 4).

Der Stator 13^{I} des E-Motors 13 hingegen ist vom Kühlmittelkreis 3 umfasst, d.h., dass der Stator 13^{I} kühlflüssigkeits- bzw. wassergekühlt ist.

Über den Wärmetauscher 20 wird die vom Ölkühlkreis 5 aufgenommene Abwärme des E-Motors 13 - bzw. Stators 13^{I} und Rotors 27 - dem Kühlmittelkreis 3 zugeführt. Dabei ist der Wärmetauscher 20 fluidisch parallel zum kühlflüssigkeits- bzw. wassergekühlten Stator 13^{I} angeordnet.

Eine erste Zuleitung 18 führt dabei von einem Knotenpunkt des Kühlmittelkreises 3 stromaufwärts des Stators 13^{I} zum Wärmetauscher 20 und eine zweite Zuleitung 19 vom Wärmetauscher 20 zum besagten Knotenpunkt 14 stromabwärts des Stators 13^{I}.

Durch eine Welle des Rotors 27 wird ein Öl, welches auch zur Schmierung und Kühlung des Getriebes 26 verwendet wird, bis zu mindestens einer Austrittsstelle des Rotors 27 gefördert. Von dieser Austrittsstelle wird das Öl fliehkraftbedingt gegen die Wicklungen des Stators 13^{I} geschleudert, wobei sich das Öl über den Rotor 27 verteilt und dabei auch bis zu den beiden Lagerstellen der Rotorwelle gelangt. Das Öl fließt schließlich bis in eine Ölwanne, die am Stator 13^{I} angebracht ist und von der es aufgenommen wird. Die Ölpumpe 23 saugt das Öl aus der Ölwanne an und fördert es.

Das Öl kühlt dabei den E-Motor 13 zusätzlich zur Kühlflüssigkeit des E-Motorkühlmittelkreises, indem es die Abwärme des Stators 13^{I} und des Rotors 27 aufnimmt, und schmiert zugleich die besagten Lagerstellen der Rotorwelle.

Der Ölkühlkreis 5 umfasst zudem ein Überwachungssystem zur Überwachung des Ölflusses. Das Überwachungssystem umfasst dabei vorzugsweise stromaufwärts des Wärmetauschers 20 und stromabwärts der Ölpumpe 23 einen Drucksensor 21. In einer ersten Ausführungsform umfasst das Überwachungssystem ferner einen Drehzahlsensor 22^{I}, welcher an der Ölpumpe 23 zur Erfassung einer Pumpendrehzahl angeordnet ist (vgl. Fig. 2). In einer zweiten Ausführungsform wird anstelle des Drehzahlsensors 22^{I} vorteilhafterweise ein zusätzlicher Drucksensor 22 vorgeschlagen, um mittels erfasster Drücke Druckdifferenzen ermitteln zu können. Durch die Verwendung der beiden Drucksensoren 21, 22 lassen sich die Kosten eines solchen Überwachungssystems signifikant reduzieren. Dabei wird vorgeschlagen, die beiden Drucksensoren 21, 22 vorzugsweise stromaufwärts des Wärmetauschers 20 und stromabwärts der Ölpumpe 23 anzuordnen. In Fig. 3 sind die beiden Drucksensoren 21, 22 im Unterschied zur Fig. 2 integraler Bestandteil eines Sensormoduls 20a.

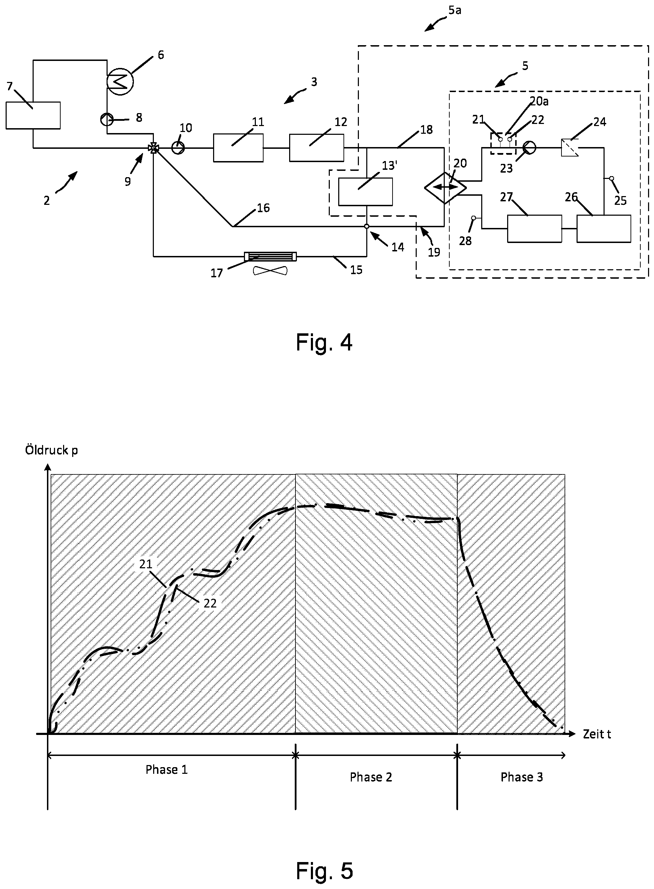

Fig. 5 veranschaulicht mittels der beiden Drucksensoren 21, 22 erfasste Druckverläufe korrespondierend zum Ölfluss im Ölkühlkreis 5 in drei aufeinanderfolgenden Phasen, und zwar:
- in einer Druckaufbauphase (Phase I),
- in einer Betriebsphase (Phase II), welche auf die Druckaufbauphase folgt, und
- in einer Druckabbauphase (Phase III), welche auf die Betriebsphase folgt.

Zur Überwachung des Ölflusses werden dabei bezüglich der einzelnen Phasen I bis III Druck-Differenzwerte zwischen den beiden Druckverläufen ermittelt. Diese Druck-Differenzwerte werden dann mit einem vorgebbaren und phasenbezogenen Vergleichswert - auch Schwellwert bzw. Referenzwert genannt - für die Druck-Differenz verglichen, um auf einen Fehler zu überprüfen, wobei bei einer Überschreitung des Vergleichswertes auf einen Fehler erkannt wird.

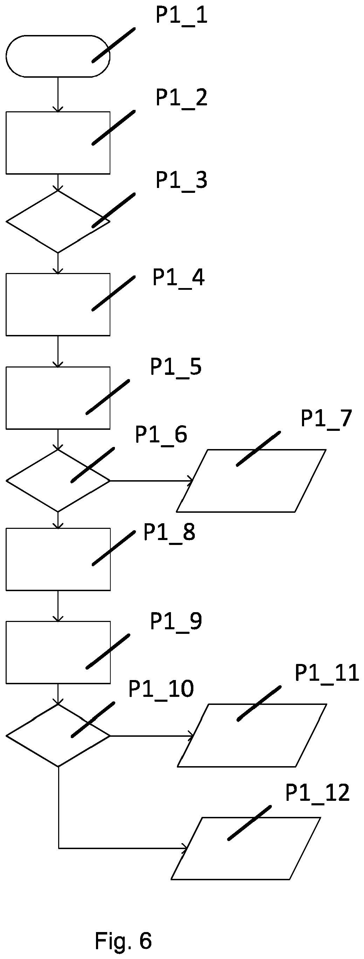

Noch bevor die Ölpumpe 23 und somit der Ölkühlkreis 5 in Betrieb genommen bzw. aktiviert wird - d.h. noch vor Einleitung der Druckaufbauphase (Phase I) -, wird vorgeschlagen, auf einen elektrischen Fehler des Überwachungssystems (bzw. Sensorfehler), d.h. z.B. auf einen Kurzschluss oder Kabelbruch zu überprüfen (vgl. dazu die Schritte P1_1 bis P1_7 in Fig. 6).

Dazu lässt man ab dem Zeitpunkt der Einleitung dieser Überprüfung (vgl. Schritt P1_1, Fig. 6) eine Mindestzeit bzw. Entprellzeit verstreichen (vgl. Schritt P1_2, Fig. 6), um sicherzustellen, dass der Ölkühlkreis 5 stillsteht und der Druck innerhalb des Ölkühlkreises 5 abgebaut ist. Im Schritt P1_3 wird diese Bedingung überprüft. Danach werden die Signale der Drucksensoren 21, 22 zu mindestens einem Zeitpunkt diskret erfasst und für diesen Zeitpunkt ein Druckdifferenzwert ermittelt (vgl. Schritt P1_4, Fig. 6). Dieser Druckdifferenzwert wird dann im Schritt P1_5 mit einem vorgebbaren, ersten Druck-Vergleichswert SW1 verglichen. Überschreitet der Druckdifferenzwert den Druck-Schwellwert SW1 in Schritt P1_6, so wird auf einen solchen elektrischen Fehler des Überwachungssystems (bzw. Sensorfehler) erkannt (vgl. Schritt P1_7, Fig. 6). Andernfalls liegt ein fehlerfreies Überwachungssystem vor.

In Schritt P1_8 wird die Ölpumpe 23 und somit der Ölkühlkreis 5 in Betrieb genommen bzw. aktiviert, wodurch die Druckaufbauphase (Phase I) eingeleitet wird. Dabei werden die Signale der Drucksensoren 21, 22 zu mindestens einem Druckhub der Ölpumpe 23 - bei der es sich um eine Verdränger-Pumpe handelt - diskret erfasst (vgl. Schritt P1_8, Fig. 6). Ein solcher Druckhub während der Druckaufbauphase (Phase I) ist in Fig. 5 eindeutig zu erkennen. Alsdann wird zumindest ein Druck-Differenzwert ermittelt (vgl. Schritt P1_8, Fig. 6) und der Druck-Differenzwert dann mit einem vorgebbaren, zweiten Druck-Vergleichswert SW2 (phasenbezogener Vergleichswert für die Druck-Differenz) verglichen (vgl. Schritt P1_9, Fig. 6). Zusätzlich dazu kann auch die Zeit bis zum Erreichen des Druckhubs mit einem vorgebbaren Zeit-Vergleichswert verglichen werden.

Für den Fall, dass der ermittelte Druckdifferenzwert einerseits sowie ggf. auch der ermittelte Zeitwert andererseits den jeweils zugeordneten Vergleichswert überschreiten (vgl. Schritt P1_10, Fig. 6), wird auf einen solchen Fehler in der Druckaufbauphase (Phase I) erkannt (vgl. Fehlerausgabe in Schritt P1_11, Fig. 6). Andernfalls liegt eine fehlerfreie Druckaufbauphase (Phase I) vor (vgl. Schritt P1_12, Fig. 6).

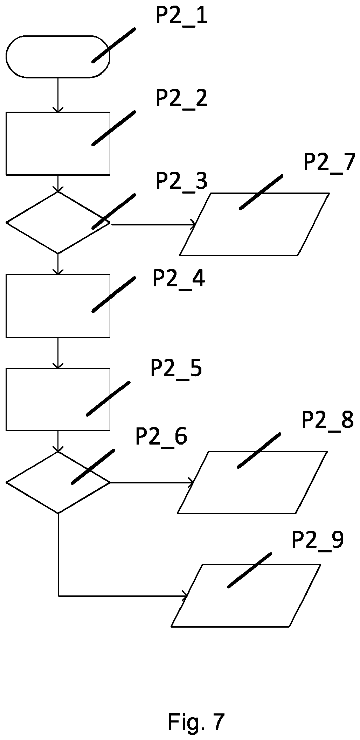

Nach einer Einleitung der Betriebsphase (Phase II; vgl. Schritt P2_1, Fig. 7), die auf die Druckaufbauphase (Phase I) folgt, werden die Signale der Drucksensoren 21, 22 erneut diskret, d.h. zu mindestens einem Zeitpunkt erfasst und für diesen Zeitpunkt ein Druckdifferenzwert aus den beiden Sensorsignalen ermittelt (vgl. Schritt P2_2, Fig. 7). Dieser Druckdifferenzwert wird dann mit einem vorgebbaren, dritten Druck-Vergleichswert SW3 (phasenbezogener Vergleichswert für die Druck-Differenz) verglichen (vgl. auch Schritt P2_2, Fig. 7), um auf einen elektrischen Fehler des Überwachungssystems (bzw. Sensorfehler) zu überprüfen. Überschreit der ermittelte Druckdifferenzwert den Druck-Vergleichswert SW3 (vgl. Schritt P2_3, Fig. 7), so wird auf einen solchen elektrischen Fehler des Überwachungssystems (bzw. Sensorfehler) erkannt (vgl. Schritt P2_7, Fig. 7).

Im Anschluss daran wird aus den diskret erfassten Signalen der beiden Drucksensoren 21, 22 ein Mittelwert gebildet (vgl. Schritt P2_4, Fig. 7) und dieser Mittelwert bzw. Druckmittelwert dann mit einem vorgebbaren, vierten Druck-Vergleichswert (phasenbezogener Vergleichswert für die Druck-Differenz) verglichen (vgl. Schritt P2_5, Fig. 7), um auf einen Fehler in der Betriebsphase (Phase II) zu überprüfen. Überschreitet dieser Druckmittelwert in Schritt P2_6 den Vergleichswert, so wird auf einen solchen Fehler in der Betriebsphase (Phase II) erkannt (vgl. Schritt P2_8, Fig. 7). Andernfalls liegt eine fehlerfreie Betriebsphase (Phase II) vor (vgl. Schritt P2_9, Fig. 7).

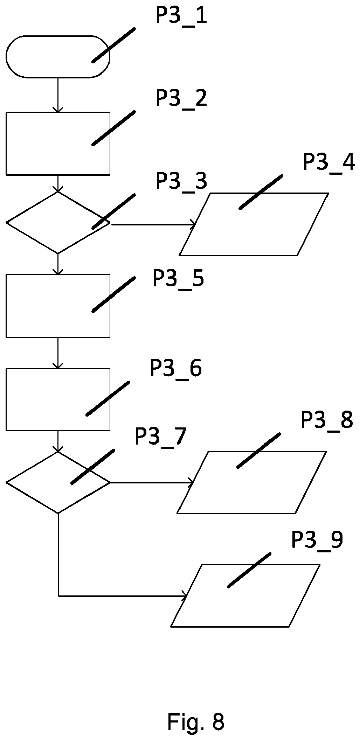

Nach einer Deaktivierung bzw. Außerbetriebnahme der Ölpumpe 23 (vgl. Schritt P3_1, Fig. 8), mit welcher die Druckabbauphase (Phase III) eingeleitet wird, werden die Signale der Drucksensoren 21, 22 zu mindestens einem Zeitpunkt erneut diskret erfasst (vgl. Schritt P3_2, Fig. 8). Alsdann wird für diesen Zeitpunkt ein Druck-Differenzwert ermittelt und dieser Druck-Differenzwert dann mit einem vorgebbaren, fünften Druck-Vergleichswert SW5 (phasenbezogener Vergleichswert für die Druck-Differenz) verglichen (vgl. auch Schritt P3_2, Fig. 8), um auf einen elektrischen Fehler des Überwachungssystems (bzw. Sensorfehler) zu überprüfen. Überschreitet dieser Druck-Differenzwert in Schritt P3_3 den Druck-Vergleichswert, wird auf einen solchen elektrischen Fehler des Überwachungssystems (bzw. Sensorfehler) erkannt (vgl. Schritt P3_4, Fig. 8). Andernfalls liegt ein fehlerfreies Überwachungssystem vor.

Danach wird ein Druckabfall überwacht, indem nach einer vorgebbaren Zeit bzw. Entprellzeit (vgl. Schritt P3_5, Fig. 8) bezüglich der Einleitung der Druckabbauphase (Phase III) die beiden diskret erfassten Drücke bzw. Drucksensorwerte mit einem vorgebbaren, auf die Entprellzeit bezogenen Zielwert (sechster Druck-Vergleichswert SW6; phasenbezogener Vergleichswert für die Druck-Differenz) verglichen werden, um auf einen Fehler in der Druckabbauphase (Phase III) zu überprüfen. Wird dieser Zielwert überschritten (vgl. Schritt P3_7, Fig. 8), wird auf einen solchen Fehler in der Druckabbauphase (Phase III) erkannt (vgl. Schritt P3_8, Fig. 8). Andernfalls liegt eine fehlerfreie Druckabbauphase (Phase III) vor (vgl. Schritt P3_9, Fig. 8).

In Bezug auf die einzelnen Phasen I, II, III wird vorgeschlagen, die Drucksensorwerte z.B. alle 10 bis 100ms zu erfassen. Die zuvor genannten phasenbezogenen Vergleichswerte können dabei phasenbezogen variieren, d.h. phasenspezifisch sein.

Obwohl in der vorhergehenden Beschreibung exemplarische Ausführungen erläutert werden, sei darauf hingewiesen, dass eine Vielzahl von Abwandlungen möglich ist (innerhalb des durch die beigefügten Ansprüche definierten Schutzbereichs). Außerdem sei darauf hingewiesen, dass es sich bei den exemplarischen Ausführungen lediglich um Beispiele handelt, die den Schutzbereich in keiner Weise einschränken sollen. Der Schutzbereich der Erfindung ist nur durch die beigefügten Ansprüche eingeschränkt. Vielmehr wird dem Fachmann durch die vorausgehende Beschreibung ein Leitfaden für die Umsetzung von mindestens einer exemplarischen Ausführung gegeben, wobei diverse Änderungen, insbesondere im Hinblick auf die Funktion und Anordnung der beschriebenen Bestandteile, vorgenommen werden können, ohne den Schutzbereich zu verlassen.

## Patentansprüche

1. Verfahren zur Überwachung eines mittels einer Ölpumpe (23) erzeugten Ölflusses in einem Ölkühlkreis (5) eines Thermomanagementsystems (1), wobei im Ölkühlkreis (5) an einer ersten Stelle ein erster Drucksensor (21) und an einer zweiten Stelle ein zweiter Drucksensor (22) angeordnet werden, wobei mittels erfasster Drücke Druck-Differenzwerte ermittelt und die Druck-Differenzwerte mit einem vorgebbaren Vergleichswert für die Druck-Differenz verglichen werden, um auf einen Fehler zu überprüfen.

2. Verfahren nach Anspruch 1, wobei der Ölfluss überwacht wird:
• in einer Druckaufbauphase (Phase I),
• in einer Betriebsphase (Phase II)
und/oder
• in einer Druckabbauphase (Phase III),
wobei in den einzelnen Phasen zumindest ein Druck-Differenzwert ermittelt und der Druck-Differenzwert mit einem vorgebbaren, phasenbezogenen Vergleichswert für die Druck-Differenz verglichen wird, um auf einen Fehler zu überprüfen.

3. Verfahren nach Anspruch 1 oder 2, wobei noch vor einer Aktivierung der Ölpumpe (23) durch die Druck-Differenzwertermittlung auf einen elektrischen Fehler der Drucksensoren (21, 22) überprüft wird, indem der ermittelte Druck-Differenzwert mit einem vorgebbaren, ersten Druck-Vergleichswert (SW1) verglichen wird.

4. Verfahren nach Anspruch 2 oder 3, wobei nach einer Aktivierung der Ölpumpe (23) während der Druckaufbauphase (Phase I) zumindest zu einem Druckhub der Ölpumpe (23) ein Druck-Differenzwert ermittelt und der Druck-Differenzwert mit einem vorgebbaren, zweiten Druck-Vergleichswert (SW2) verglichen wird, um auf einen Fehler in der Druckaufbauphase (Phase I) zu überprüfen.

5. Verfahren nach Anspruch 4, wobei zudem die Zeit bis zum Erreichen des Druckhubs mit einem vorgebbaren Zeit-Vergleichswert verglichen wird, um auf einen Fehler in der Druckaufbauphase (Phase I) zu überprüfen.

6. Verfahren nach Anspruch 4 oder 5, wobei während der Betriebsphase (Phase II) zumindest ein Druck-Differenzwert ermittelt und mit einem vorgebbaren, dritten Druck-Vergleichswert (SW3) verglichen wird, um auf einen elektrischen Fehler der Drucksensoren (21, 22) zu überprüfen.

7. Verfahren nach Anspruch 6, wobei mittels der erfassten Drücke ein Mittelwert gebildet und der Mittelwert mit einem vorgebbaren, vierten Druck-Vergleichswert (SW4) verglichen wird, um auf einen Fehler in der Betriebsphase (Phase II) zu überprüfen.

8. Verfahren nach Anspruch 7, wobei nach einer Deaktivierung der Ölpumpe (23) während der Druckabbauphase (Phase III) zumindest ein Druck-Differenzwert ermittelt und der Druck-Differenzwert mit einem vorgebbaren, fünften Druck-Vergleichswert (SW5) verglichen wird, um auf einen elektrischen Fehler der Drucksensoren (21, 22) zu überprüfen.

9. Verfahren nach Anspruch 8, wobei zudem nach einer vorgebbaren Entprellzeit bezüglich der Deaktivierung die erfassten Drücke mit einem vorgebbaren, auf die Entprellzeit bezogenen Druck-Zielwert verglichen werden, um auf einen Fehler in der Druckabbauphase (Phase III) zu überprüfen.

10. Verfahren nach einem der vorhergehenden Ansprüche, wobei der Ölkühlkreis (5) zur zusätzlichen Kühlung eines E-Motors (13) verwendet wird, wobei der Ölkühlkreis (5) über einen Wärmetauscher (20) an einen Kühlmittelkreis (3) zur Kühlung des E-Motors (13) thermisch angebunden wird.

11. Verfahren nach einem der vorhergehenden Ansprüche, wobei die beiden Drucksensoren (21, 22) stromaufwärts eines Wärmetauschers (20) und stromabwärts der Ölpumpe (23) angeordnet werden.

12. Computerprogramm zur Durchführung eines Verfahrens nach einem der Ansprüche 1 bis 11.

13. Computerprogrammprodukt, umfassend Programmcode-Mittel, die auf einem computerlesbaren Datenträger gespeichert sind, um das Verfahren nach einem der der Ansprüche 1 bis 11 durchzuführen, wenn die Programmcode-Mittel auf einem Computer ausgeführt werden.

14. Steuergerät mit einem Computerprogramm zur Durchführung eines Verfahrens nach einem der Ansprüche 1 bis 11.

15. Fahrzeug mit einem Steuergerät nach Anspruch 14.

## Claims

1. Method for monitoring an oil flow, generated by means of an oil pump (23), in an oil cooling circuit (5) of a thermal management system (1), wherein a first pressure sensor (21) is arranged at a first point and a second pressure sensor (22) is arranged at a second point in the oil cooling circuit (5), wherein pressure difference values are determined by means of recorded pressures and the pressure difference values are compared with a predeterminable comparison value for the pressure difference in order to check for a fault.

2. Method according to Claim 1, wherein the oil flow is monitored:
• in a pressure build-up phase (phase I),
• in an operating phase (phase II)
and/or
• in a pressure reduction phase (phase III),
wherein at least one pressure difference value is determined in the individual phases and the pressure difference value is compared with a predeterminable, phase-related comparison value for the pressure difference in order to check for a fault.

3. Method according to Claim 1 or 2, wherein, even before the oil pump (23) is activated by way of the pressure difference value determination, an electrical fault in the pressure sensors (21, 22) is checked by virtue of the determined pressure difference value being compared with a predeterminable first pressure comparison value (SW1).

4. Method according to Claim 2 or 3, wherein, after the oil pump (23) has been activated during the pressure build-up phase (phase I), a pressure difference value is determined at least for one pressure stroke of the oil pump (23) and the pressure difference value is compared with a predeterminable second pressure comparison value (SW2) in order to check for a fault in the pressure build-up phase (phase I).

5. Method according to Claim 4, wherein the time until the pressure stroke is reached is also compared with a predeterminable time comparison value in order to check for a fault in the pressure build-up phase (phase I).

6. Method according to Claim 4 or 5, wherein, during the operating phase (phase II), at least one pressure difference value is determined and compared with a predeterminable third pressure comparison value (SW3) in order to check for an electrical fault in the pressure sensors (21, 22).

7. Method according to Claim 6, wherein an average value is formed by means of the recorded pressures and the average value is compared with a predeterminable fourth pressure comparison value (SW4) in order to check for a fault in the operating phase (phase II).

8. Method according to Claim 7, wherein, after the oil pump (23) is deactivated, during the pressure reduction phase (phase III), at least one pressure difference value is determined and the pressure difference value is compared with a predeterminable fifth pressure comparison value (SW5) in order to check for an electrical fault in the pressure sensors (21, 22).

9. Method according to Claim 8, wherein, after a predeterminable debounce time with respect to the deactivation, the recorded pressures are also compared with a predeterminable pressure target value related to the debounce time in order to check for a fault in the pressure reduction phase (phase III).

10. Method according to one of the preceding claims, wherein the oil cooling circuit (5) is used for additional cooling of an electric motor (13), wherein the oil cooling circuit (5) is thermally connected to a coolant circuit (3) via a heat exchanger (20) for the purpose of cooling the electric motor (13).

11. Method according to one of the preceding claims, wherein the two pressure sensors (21, 22) are arranged upstream of a heat exchanger (20) and downstream of the oil pump (23).

12. Computer program for carrying out a method according to one of Claims 1 to 11.

13. Computer program product, comprising program code means, which are stored on a computer-readable data storage medium in order to carry out the method according to one of Claims 1 to 11 when the program code means are executed on a computer.

14. Control device having a computer program for carrying out a method according to one of Claims 1 to 11.

15. Vehicle having a control device according to Claim 14.

## Revendications

1. Procédé permettant de surveiller un flux d'huile produit au moyen d'une pompe à huile (23) dans un circuit de refroidissement d'huile (5) d'un système de gestion thermique (1), dans lequel un premier capteur de pression (21) est disposé à un premier endroit et un deuxième capteur de pression (22) est disposé à un deuxième endroit dans le circuit de refroidissement d'huile (5), dans lequel des valeurs de différence de pression sont déterminées au moyen de pressions détectées, et les valeurs de différence de pression sont comparées avec une valeur de comparaison prédéfinissable pour la différence de pression afin de vérifier la présence d'un défaut.

2. Procédé selon la revendication 1, dans lequel le flux d'huile est surveillé :
• dans une phase de montée en pression (phase I),
• dans une phase de fonctionnement (phase II), et/ou
• dans une phase de réduction de pression (phase III),
dans lequel une valeur de différence de pression est déterminée dans les phases individuelles, et la valeur de différence de pression est comparée avec une valeur de comparaison prédéfinissable, liée à la phase, pour la différence de pression afin de vérifier la présence d'un défaut.

3. Procédé selon la revendication 1 ou 2, dans lequel, même avant une activation de la pompe à huile (23), la détermination de la valeur de différence de pression sert à vérifier la présence d'un défaut électrique des capteurs de pression (21, 22) en ce que la valeur de différence de pression déterminée est comparée avec une première valeur de comparaison de pression prédéfinissable (SW1).

4. Procédé selon la revendication 2 ou 3, dans lequel, après une activation de la pompe à huile (23) pendant la phase de montée en pression (phase I), une valeur de différence de pression est déterminée pour au moins une course de compression de la pompe à huile (23), et la valeur de différence de pression est comparée avec une deuxième valeur de comparaison de pression prédéfinissable (SW2) afin de vérifier la présence d'un défaut dans la phase de montée en pression (phase I).

5. Procédé selon la revendication 4, dans lequel en outre le temps jusqu'à l'obtention de la course de compression est comparé avec une valeur de comparaison de temps prédéfinissable afin de vérifier la présence d'un défaut dans la phase de montée en pression (phase I).

6. Procédé selon la revendication 4 ou 5, dans lequel pendant la phase de fonctionnement (phase II), au moins une valeur de différence de pression est déterminée et comparée avec une troisième valeur de comparaison de pression prédéfinissable (SW3) afin de vérifier la présence d'un défaut électrique des capteurs de pression (21, 22).

7. Procédé selon la revendication 6, dans lequel une moyenne est formée au moyen des pressions détectées, et la moyenne est comparée avec une quatrième valeur de comparaison de pression prédéfinissable (SW4) afin de vérifier la présence d'un défaut dans la phase de fonctionnement (phase II).

8. Procédé selon la revendication 7, dans lequel, après une désactivation de la pompe à huile (23) pendant la phase de réduction de pression (phase III), au moins une valeur de différence de pression est déterminée et la valeur de différence de pression est comparée avec une cinquième valeur de comparaison de pression prédéfinissable (SW5) afin de vérifier la présence d'un défaut électrique des capteurs de pression (21, 22).

9. Procédé selon la revendication 8, dans lequel en outre après un délai anti-rebond prédéfinissable concernant la désactivation, les pressions détectées sont comparées avec une valeur cible de pression prédéfinissable, liée au délai anti-rebond, afin de vérifier la présence d'un défaut dans la phase de réduction de pression (phase III).

10. Procédé selon l'une quelconque des revendications précédentes, dans lequel le circuit de refroidissement d'huile (5) est utilisé pour le refroidissement supplémentaire d'un moteur électrique (13), dans lequel le circuit de refroidissement d'huile (5) est relié thermiquement à un circuit de réfrigérant (3) par l'intermédiaire d'un échangeur thermique (20) pour le refroidissement du moteur électrique (13).

11. Procédé selon l'une quelconque des revendications précédentes, dans lequel les deux capteurs de pression (21, 22) sont disposés en amont d'un échangeur thermique (20) et en aval de la pompe à huile (23).

12. Programme informatique permettant d'exécuter un procédé selon l'une quelconque des revendications 1 à 11.

13. Produit de programme informatique, comprenant des moyens de code programme qui sont stockés sur un support de données lisible par ordinateur pour exécuter le procédé selon l'une quelconque des revendications 1 à 11 si les moyens de code programme sont exécutés sur un ordinateur.

14. Appareil de commande comprenant un programme informatique permettant d'exécuter un procédé selon l'une quelconque des revendications 1 à 11.

15. Véhicule comprenant un appareil de commande selon la revendication 14.
